# NEUE EUROPÄISCHE PATENTSCHRIFT

(11) **EP 3 434 933 B2**
(45) Veröffentlichungstag und Bekanntmachung des Hinweises auf die Entscheidung über den Einspruch: **23.11.2022**
(45) Hinweis auf die Patenterteilung: 25.09.2019
(21) Anmeldenummer: 18170562.5
(22) Anmeldetag: 03.05.2018
(51) Int. Cl.: F16G 13/16, H02G 3/04, H02G 11/00

(54) **TRENNSTEG**
PARTITION
NERVURE DE SÉPARATION

(30) Priorität: 28.07.2017 DE 102017117089
(43) Veröffentlichungstag der Anmeldung: 30.01.2019
(73) Patentinhaber: Murrplastik Systemtechnik GmbH, 71570 Oppenweiler (DE)
(72) Erfinder:
(74) Vertreter: Patentanwälte Bregenzer und Reule Partnerschaftsgesellschaft mbB

(56) Entgegenhaltungen:
- DE-A1- 19 703 410
- DE-A1- 19 810 960
- DE-A1- 19 852 133
- DE-U- 7 241 434

## Beschreibung

Die Erfindung betrifft einen Trennsteg für ein Kettenglied einer Energieführungskette gemäß Oberbegriff des Anspruchs 1.

Solche Trennstege sind aus DE19810960 A1 und DE19852133 A1 bekannt. Trennstege werden dazu verwendet, das Innere eines Kettenglieds einer Energieführungskette, das einen Abschnitt eines Führungskanals für Versorgungsleitungen bildet, aufzuteilen, so dass der Führungskanal in Teilkanäle aufgeteilt ist, wenn alle Kettenglieder entsprechend mit Trennstegen bestückt sind. Eine weitere Aufteilung in Teilkanäle erfolgt, indem Regalböden in die Einschuböffnungen der Trennstege eingeschoben werden. Um den Führungskanal einer Energieführungskette flexibel gestalten zu können, sind sowohl die Regalböden in die Trennstege einsetzbar und aus diesen wieder entnehmbar, als auch die Trennstege lösbar in die Kettenglieder eingesetzt. Dabei weisen die Trennstege Befestigungsmittel zum lösbaren Befestigen am oberen und am unteren Rahmensteg des betreffenden Kettenglieds auf. Bei dem vorbekannten Trennsteg ist es zudem möglich, das die Einschuböffnungen verschließende Abdeckelement vom Grundkörper abzunehmen, um Regalböden in die Einschuböffnungen einzuschieben und aus diesen entfernen zu können. Zu diesem Zweck muss der obere Rahmensteg abgenommen werden, so dass eine Rastverbindung zwischen dem oberen Ende des Abdeckelements und dem Grundkörper des Trennstegs gelöst werden kann. Ist diese Rastverbindung gelöst, so kann der Abdeckkörper im unteren Bereich aus dem Grundkörper herausgenommen werden. Zum Bestücken der Energieführungskette mit Regalböden und Versorgungsleitungen wie beispielsweise elektrischen Kabeln müssen daher stets die Rahmenstege auf einer Seite der Energieführungskette abgenommen werden. Das bedeutet, dass die Energieführungskette vor dem Bestücken in eine Position gebracht werden muss, in der die abzunehmenden Rahmenstege nach oben weisen. Dies wird als aufwendig empfunden.

Es ist daher Aufgabe der Erfindung, einen Trennsteg der eingangs genannten Art derart weiterzubilden, dass er eine einfachere Bestückung von Energieführungsketten ermöglicht.

Diese Aufgabe wird erfindungsgemäß durch einen Trennsteg mit den Merkmalen des Anspruchs 1 und durch einen Trennsteg mit den Merkmalen des Anspruchs 14 gelöst. Vorteilhafte Weiterbildungen der Erfindung sind Gegenstand der abhängigen Ansprüche.

Der Erfindung liegt der Gedanke zugrunde, dass mittels der Befestigungsbereiche an beiden Enden des Abdeckkörpers, welche jeweils ein Schwenkelement aufweisen, ein Verschwenken des Abdeckkörpers gegenüber dem Grundkörper sowohl mittels des Schwenkelements an einem Ende als auch mittels des Schwenkelements am anderen Ende möglich ist. In anderen Worten ist es möglich, das Abdeckelement an einem beliebigen seiner Enden vom Grundkörper zu lösen und dieses Ende vom Grundkörper weg zu bewegen, während das andere Ende mit dem Grundkörper verbunden bleibt und sein Schwenkelement im Grundkörper verdreht wird. Beim Bestücken der Energieführungskette, bei dem die Kabel und die Regalböden zweckmäßig von oben in den Führungskanal eingebracht werden, ist es somit irrrelevant, welches der beiden Enden des Abdeckelements nach oben gerichtet ist. Das Abdeckelement lässt sich in jedem Fall nach unten wegschwenken, so dass es beim Beladen der Energieführungskette nicht im Weg ist.

Zweckmäßig ist sowohl der Abdeckkörper als auch der Grundkörper bezüglich einer in der Mitte zwischen den Enden des Abdeckkörpers verlaufenden Mittelebene spiegelsymmetrisch. Beim Einsetzen der Trennstege in die Energieführungskette muss der Monteur damit nicht darauf achten, in welcher Ausrichtung er den Trennsteg einsetzt.

Die Rastmittel an jedem Ende des Abdeckkörpers weisen zweckmäßig eine in einer zwischen den beiden Enden verlaufenden Längsrichtung elastisch verformbare, einen Rasthaken tragende Rastzunge auf, die in einer ersten Querrichtung aus dem Grundkörper ragt. Die Rastzunge kann dann zum Lösen der Rastverbindung an ihrem aus dem Grundkörper ragenden Abschnitt ergriffen werden. Dabei wird bevorzugt, dass der Rasthaken an jedem Ende in Richtung vom entgegengesetzten Ende weg absteht. Ein Lösen der Rastverbindung erfolgt dann durch Niederdrücken der Rastzunge in Richtung zum anderen Ende des Abdeckelements.

Gemäß einem ersten Erfindungsaspekt weisen die Schwenkelemente an jedem Ende des Abdeckkörpers jeweils zwei in einer quer zur zwischen den beiden Enden verlaufenden Längsrichtung verlaufenden zweiten Querrichtung zu einander abgewandten Seiten abstehende Zapfen auf. Eine solche beidseitige Verankerung des Abdeckkörpers im Grundkörper ist besonders stabil. Dabei wird bevorzugt, dass die erste Querrichtung, in der die elastisch verformbare Zunge aus dem Grundkörper ragt, und die zweite Querrichtung, in der die Zapfen abstehen, im Wesentlichen senkrecht zueinander verlaufen.

Vorzugsweise sind die Zapfen auf zwei einander abgewandten Seiten einer Zentralpartie angeordnet, die zwischen zwei Wangen des Grundkörpers eingreift. Die Zentralpartie ist dann beim Verschwenken des Abdeckkörpers frei zwischen den Wangen beweglich, während die Zapfen im Grundkörper verbleiben können. Desweiteren wird bevorzugt, dass die Zapfen jeweils einen Querschnitt aufweisen, der in einer ersten Raumrichtung eine größere Breite aufweist als in einer senkrecht zur ersten Raumrichtung verlaufenden zweiten Raumrichtung. Dies ist insbesondere dann vorteilhaft, wenn die Zapfen jeweils in einer zur Schmalseite randoffenen Ausnehmung verdrehbar aufgenommen sind. Diese Ausnehmung weist zweckmäßig eine zur Schmalseite randoffene erste Partie und eine gegenüber der ersten Partie abgewinkelte zweite Partie auf, wobei die Zapfen beim Verschwenken des Abdeckkörpers gegenüber dem Grundkörper von der zugehörigen ersten Partie in die zugehörige zweite Partie beweglich sind. Die Schwenkachse, um die ein Verschwenken des Abdeckkörpers bezüglich des Grundkörpers erfolgt, ist dann bezüglich des Grundkörpers nicht ortsfest, sondern bewegt sich beim Verschwenken bezüglich des Grundkörpers. Zudem wird bevorzugt, dass die Ausnehmungen in Längsrichtung im Abstand zu den Befestigungsmitteln angeordnet sind. Dies ermöglicht ein Verschwenken des Abdeckkörpers bezüglich des Grundkörpers auch ohne vorheriges Abheben eines Rahmenstegs vom Trennsteg.

Zweckmäßig sind die Zapfen gegen eine Rückhaltekraft aus der zugehörigen zweiten Partie in die zugehörige erste Partie beweglich. Dadurch wird der Abdeckkörper auch in der Stellung fixiert, in der er gegenüber dem Grundkörper verschwenkt ist, und kann keine unerwünschten und störenden Bewegungen ausführen. Alternativ oder ergänzend kann diese Fixierung auch dadurch erreicht werden, dass der Abdeckkörper nahe seinen Enden jeweils einen vom Grundkörper weg vorstehenden Vorsprung aufweist, der beim Verschwenken des Abdeckkörpers gegenüber dem Grundkörper durch Verdrehen des am betreffenden Ende angeordneten Schwenkelements eine Kante am Grundkörper in einer Endstellung rastend hintergreift. Gemäß einem weiteren unabhängigen Erfindungsaspekt wird die Fixierung des Abdeckkörpers in der Stellung, in der er gegenüber dem Grundkörper verschwenkt ist, dadurch erreicht, dass der Abdeckkörper nahe seinen Enden jeweils einen vom Grundkörper weg vorstehenden Vorsprung aufweist, der beim Verschwenken des Abdeckkörpers gegenüber dem Grundkörper durch Verdrehen des am betreffenden Ende angeordneten Schwenkelements eine Kante am Grundkörper in einer Endstellung rastend hintergreift.

Im Folgenden wird die Erfindung anhand eines in der Zeichnung schematisch dargestellten Ausführungsbeispiels näher erläutert. Es zeigen
- Fig. 1a, 1b: einen an zwei Rahmenstegen montierten Trennsteg mit an der Schmalseite geschlossenen und offenen Einschuböffnungen in Seitenansicht;
- Fig. 2a, 2b: den Trennsteg gemäß Fig. 1a, 1b, jeweils in einer Schnittdarstellung, in Fig. 2b ohne die Rahmenstege und ohne Regalböden und
- Fig. 3: zwei an Rahmenstegen montierte Trennstege in Frontansicht.

Der in der Zeichnung dargestellte Trennsteg 10 weist einen Grundkörper 12 und einen Abdeckkörper 14 auf, die jeweils einstückig aus Kunststoff gefertigt sind. Der Grundkörper 12 weist endseitig jeweils Befestigungsmittel 16 auf, mit denen er an einem oberen Rahmensteg 18 und einem unteren Rahmensteg 20 eines Kettenglieds einer Energieführungskette befestigt werden kann. Die Rahmenstege 18, 20 verbinden jeweils zwei in der Zeichnung nicht dargestellte Seitenglieder des Kettenglieds miteinander. Die Befestigungsmittel 16 weisen jeweils Rastvorsprünge 22 auf, die seitlich in die Rahmenstege 18, 20 eingreifen. Der Trennsteg 10 weist zudem im gezeigten Ausführungsbeispiel drei Einschuböffnungen 24 auf, in die Regalböden 26 eingeschoben werden können. In der Zeichnung ist dargestellt, wie in zwei der Einschuböffnungen 24 jeweils ein Regalboden 26 eingeschoben ist, während die mittlere Einschuböffnung 24 frei ist. Die Einschuböffnungen 24 sind jeweils zu einer Schmalseite 28 des Grundkörpers 12 offen. Der Abdeckkörper 14 ist lösbar am Grundkörper 12 an dessen Schmalseite 28 befestigt und verschließt dort die Einschuböffnungen 24.

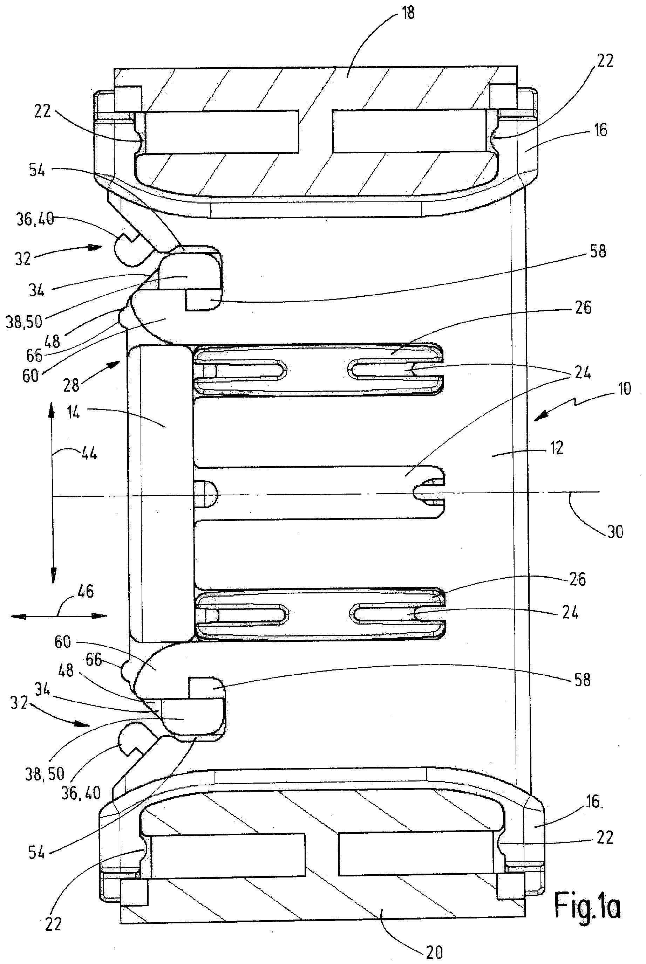

Sowohl der Grundkörper 12 als auch der Abdeckkörper 14 sind bezüglich einer Mittelebene spiegelsymmetrisch. Die Mittelebene 30 ist dabei als gemeinsame Mittelebene in Fig. 1a eingezeichnet. An jedem seiner beiden Enden 32 weist der Abdeckkörper 14 einen Befestigungsbereich 34 auf, der ein Rastmittel 36 zum lösbaren Befestigen am Grundkörper 12 und ein verdrehbar im Grundkörper 12 aufgenommenes Schwenkelement 38 aufweist. Das Rastmittel 36 weist wiederum eine elastisch verformbare Rastzunge 40 auf, die einen Rasthaken 42 trägt. Der Rasthaken 42 steht dabei in Richtung vom jeweils anderen Ende 32 weg von der Rastzunge 40 ab, welche in einer Längsrichtung 44 elastisch verformbar ist, die zwischen den beiden Enden 32 verläuft. Zudem ragt die Rastzunge 40 in einer ersten Querrichtung 46 aus dem Grundkörper 12 heraus, welche senkrecht zur Längsrichtung 44 steht. Jedes der Schwenkelemente 38 weist eine Zentralpartie 48 auf, von deren einander abgewandten Seiten jeweils ein Zapfen 50 in einer senkrecht zur Längsrichtung 44 und zur ersten Querrichtung 46 verlaufenden zweiten Querrichtung 52 absteht. Die Zapfen 50 weisen jeweils einen annähernd rechteckigen Querschnitt auf, wobei zwei der Ecken abgerundet sind, und sind jeweils in einer Ausnehmung 54 im Grundkörper 12 aufgenommen. Die Ausnehmungen 54 weisen jeweils eine zur Schmalseite 28 offene erste Partie 56 und eine von der ersten Partie 56 abgewinkelte und im Abstand zur Schmalseite 28 angeordnete zweite Partie 58 auf. Die Zentralpartie 48 wiederum greift zwischen zwei im Abstand zu einander angeordneten Wangen 60 des Grundkörpers 12 ein.

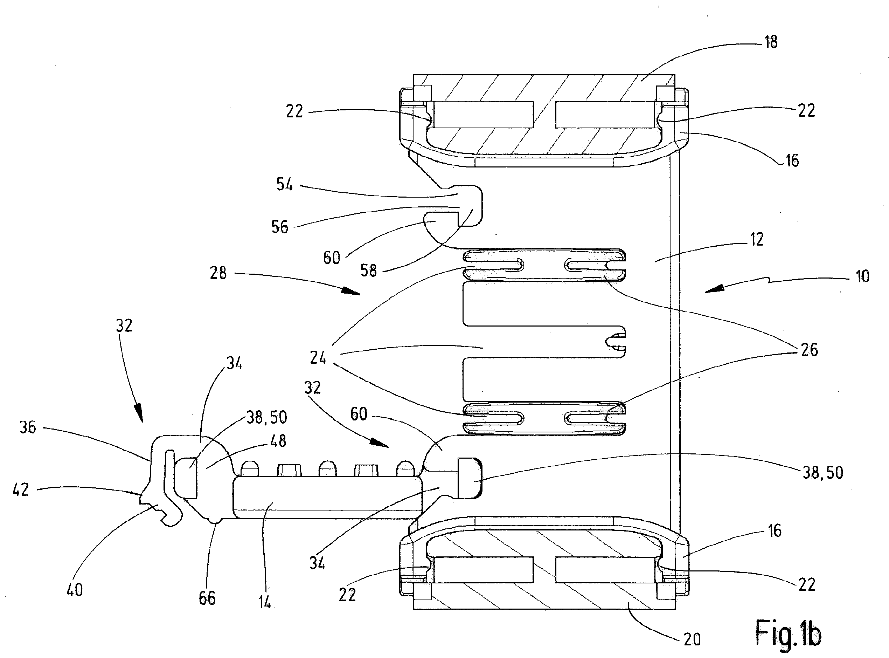

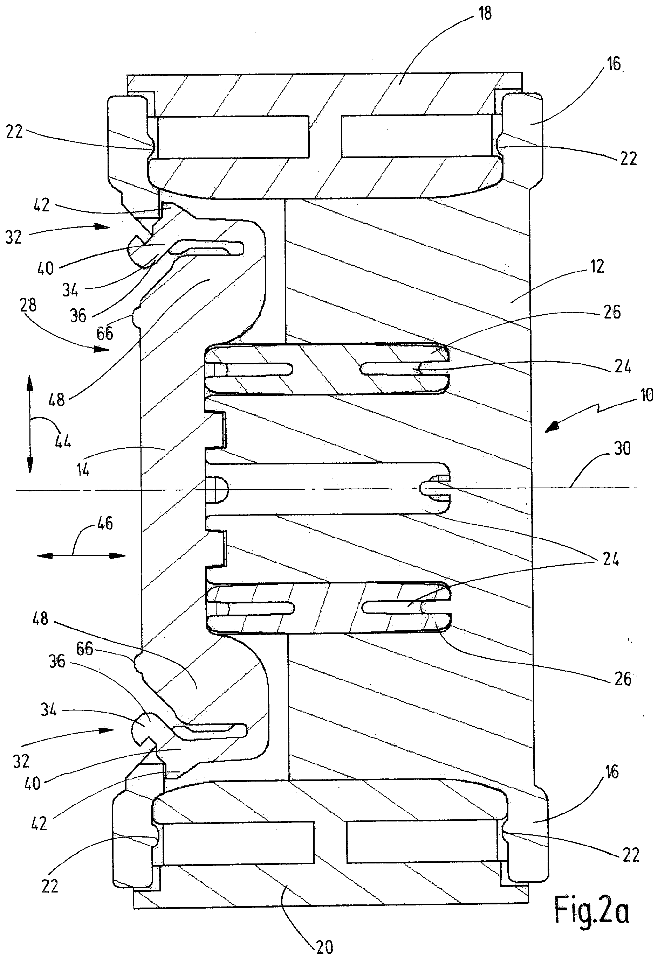

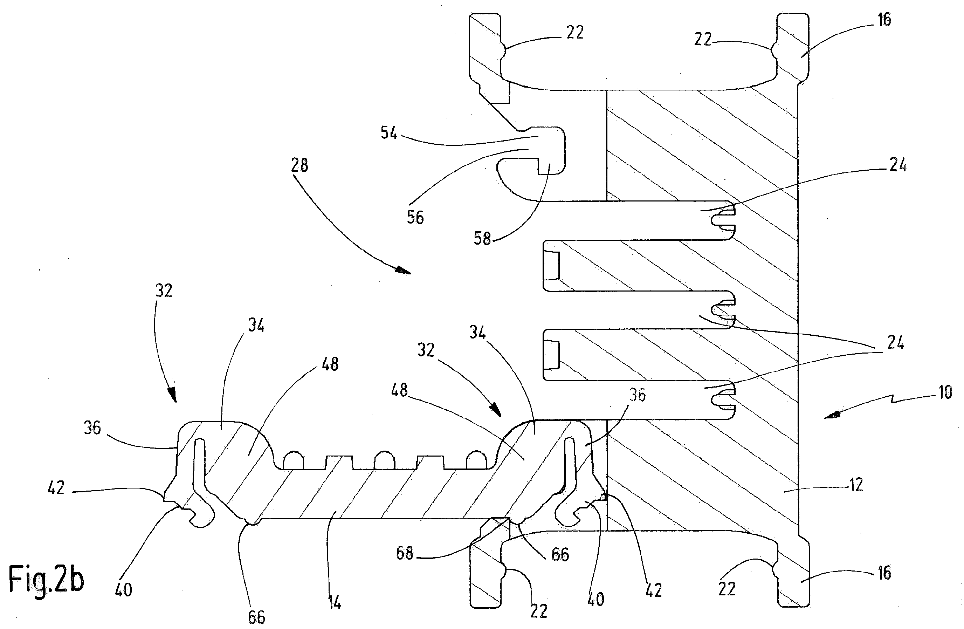

Die Verbindung zwischen dem Abdeckkörper 14 und dem Grundkörper 12 kann an beiden Enden 32 gelöst werden, so dass der Abdeckkörper 14 vom Grundkörper 12 entfernt werden kann, um die Einschuböffnungen 24 an der Schmalseite 28 freizulegen. Die Einschuböffnungen 24 können jedoch auch freigelegt werden, ohne den Abdeckkörper 14 vom Grundkörper 12 vollständig zu entfernen, wie in Fig. 1b gezeigt. Dabei wird die Rastverbindung lediglich an einem der Enden 32 gelöst und der Abdeckkörper 14 wird gegenüber dem Grundkörper 12 durch Verdrehen der Zapfen 50 am anderen der beiden Enden 32 in der zugehörigen Ausnehmung 54 verschwenkt. Gleichzeitig werden die Zapfen 50 von der ersten Partie 56 der Ausnehmung 54 in deren zweite Partie 58 bewegt, in der sie, wie in Fig. 1b gezeigt, mit nur wenig Spiel aufgenommen sind. Einem Zurückschwenken des Abdeckkörpers 14 steht dann eine Rückhaltekraft entgegen, da beim Zurückbewegen der Zapfen 50 von der zweiten Partie 58 in die erste Partie 56 die Zapfen 50 und/oder der Grundkörper 12 im Bereich der Ausnehmungen 54 geringfügig elastisch verformt wird. Zudem weist der Abdeckkörper 14 zwei Vorsprünge 66 auf, die bei geschlossenen Einschuböffnungen 24 vom Grundkörper 12 weg weisen. Bei geöffneten Einschuböffnungen (Fig. 1b, 2b) hintergreift der näher an der nicht gelösten Rastverbindung angeordnete Vorsprung 66 eine Kante 68 des Grundkörpers 12, so dass einem Zurückschwenken des Abdeckkörpers 14 eine weitere Rückstellkraft entgegen steht, da beim Zurückbewegen der Grundkörper 12 im Bereich der Kante 68 und/oder der Vorsprung 66 geringfügig elastisch verformt wird. Es versteht sich von selbst, dass der Abdeckkörper 14 auch in die andere Richtung verschwenkt werden kann, als in Fig. 1b gezeigt. Zu diesem Zweck wird die Rastverbindung am in Fig. 1a unten gezeigten Ende 32 gelöst und die Zapfen 50 am oben dargestellten Ende 32 werden in den zugehörigen Ausnehmungen 54 verdreht.

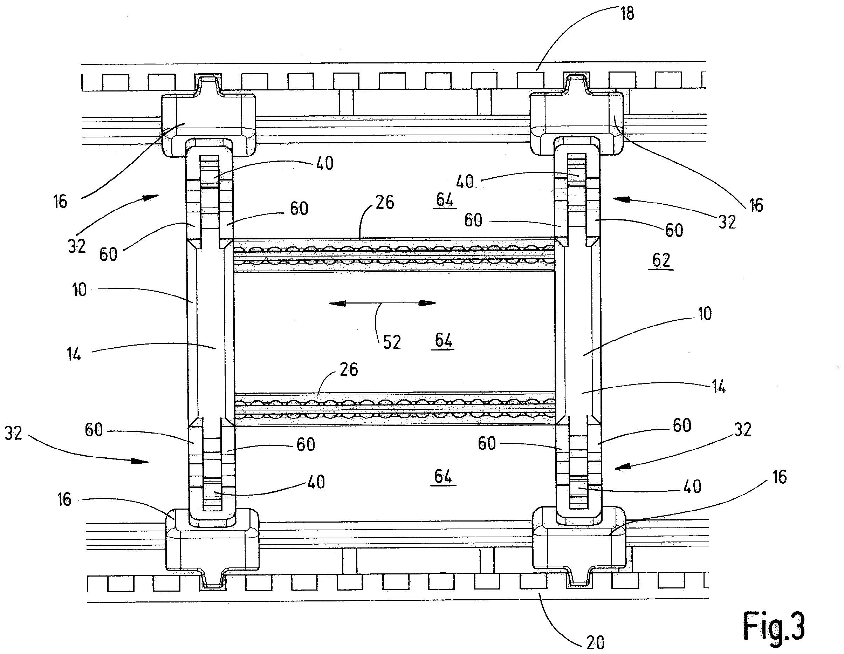

In Fig. 3 schließlich ist gezeigt, wie mittels Einsatz zweier Trennstege 10 und zweier Regalböden 26 in jedes Kettenglied der von den Kettengliedern rings umschlossene Führungskanal 62 einer Energieführungskette in mehrere Teilkanäle 64 aufgeteilt werden kann.

Zusammenfassend ist Folgendes festzuhalten: Die Erfindung betrifft einen Trennsteg 10 für ein Kettenglied einer Energieführungskette, wobei das Kettenglied zwei im Abstand zueinander angeordnete, mittels eines oberen und eines unteren Rahmenstegs 18, 20 lösbar miteinander verbundene Seitenglieder aufweist und einen Abschnitt eines Führungskanals 62 zur Aufnahme von Versorgungsleitungen rings umschließt, mit einem Grundkörper 12, der Befestigungsmittel 16 zum lösbaren Befestigen am unteren Rahmensteg 20 sowie mindestens eine zu einer sich zwischen den Befestigungsmitteln 16 erstreckenden Schmalseite 28 offene Einschuböffnung 24 für die Aufnahme eines Regalbodens 26 aufweist, und mit einem am Grundkörper 12 lösbar befestigten, die Schmalseite 28 des Grundkörpers 12 abdeckenden und die mindestens eine Einschuböffnung 24 an der Schmalseite 28 verschließenden Abdeckkörper 14, der an seinen Enden 32 jeweils einen Befestigungsbereich 34 aufweist, wobei die Befestigungsbereiche 34 jeweils ein Rastmittel 36 zum lösbaren Befestigen am Grundkörper 12 aufweisen. Erfindungsgemäß ist vorgesehen, dass der Grundkörper 12 Befestigungsmittel 16 zum lösbaren Befestigen am oberen Rahmensteg 18 aufweist und dass die Befestigungsbereiche 34 jeweils ein verdrehbar im Grundkörper 12 aufgenommenes Schwenkelement 38 zum Verschwenken des Abdecckörpers 14 bezüglich des Grundkörpers 12 aufweisen.

## Patentansprüche

1. Trennsteg für ein Kettenglied einer Energieführungskette, wobei das Kettenglied zwei im Abstand zueinander angeordnete, mittels eines oberen und eines unteren Rahmenstegs (18, 20) lösbar miteinander verbundene Seitenglieder aufweist und einen Abschnitt eines Führungskanals (62) zur Aufnahme von Versorgungsleitungen rings umschließt, mit einem Grundkörper (12), der Befestigungsmittel (16) zum lösbaren Befestigen am oberen Rahmensteg (18) und Befestigungsmittel (16) zum lösbaren Befestigen am unteren Rahmensteg (20) sowie mindestens eine zu einer sich zwischen den Befestigungsmitteln (16) erstreckenden Schmalseite (28) offene Einschuböffnung (24) für die Aufnahme eines Regalbodens (26) aufweist, und mit einem am Grundkörper (12) lösbar befestigten, die Schmalseite (28) des Grundkörpers (12) abdeckenden und die mindestens eine Einschuböffnung (24) an der Schmalseite (28) verschließenden Abdeckkörper (14), der an seinen Enden (32) jeweils einen Befestigungsbereich (34) aufweist, wobei die Befestigungsbereiche (34) jeweils ein Rastmittel (36) zum lösbaren Befestigen am Grundkörper (12) aufweisen, **dadurch gekennzeichnet, dass** die Befestigungsbereiche (34) jeweils ein verdrehbar im Grundkörper (12) aufgenommenes Schwenkelement (38) zum Verschwenken des Abdeckkörpers (14) bezüglich des Grundkörpers (12) aufweisen und dass die Schwenkelemente (38) an jedem Ende (32) des Abdeckkörpers (14) jeweils zwei in einer quer zur zwischen den beiden Enden (32) verlaufenden Längsrichtung (44) verlaufenden zweiten Querrichtung (52) zu einander abgewandten Seiten abstehende Zapfen (50) aufweisen.

2. Trennsteg nach Anspruch 1, **dadurch gekennzeichnet, dass** der Abdecckörper (14) bezüglich einer in der Mitte zwischen seinen Enden (32) verlaufenden Mittelebene (30) spiegelsymmetrisch ist.

3. Trennsteg nach Anspruch 2, **dadurch gekennzeichnet, dass** der Grundkörper (12) bezüglich der Mittelebene (30) spiegelsymmetrisch ist.

4. Trennsteg nach einem der vorangehenden Ansprüche, **dadurch gekennzeichnet, dass** die Rastmittel (36) an jedem Ende (32) des Abdeckkörpers (14) eine in einer zwischen den beiden Enden (32) verlaufenden Längsrichtung (44) elastisch verformbare, einen Rasthaken (42) tragende Rastzunge (40) aufweisen, die in einer ersten Querrichtung (46) aus dem Grundkörper (12) ragt.

5. Trennsteg nach Anspruch 4, **dadurch gekennzeichnet, dass** der Rasthaken (42) an jedem Ende (32) in Richtung vom entgegengesetzten Ende (32) weg absteht.

6. Trennsteg nach Anspruch 4 oder 5, **dadurch gekennzeichnet, dass** die erste und die zweite Querrichtung (46, 52) im Wesentlichen senkrecht zueinander verlaufen.

7. Trennsteg nach einem der vorangehenden Ansprüche, **dadurch gekennzeichnet, dass** die Zapfen (50) auf zwei einander abgewandten Seiten einer Zentralpartie (48) angeordnet sind, die zwischen zwei Wangen (60) des Grundkörpers (12) eingreift.

8. Trennsteg nach einem der vorangehenden Ansprüche, **dadurch gekennzeichnet, dass** die Zapfen (50) jeweils einen Querschnitt aufweisen, der in einer ersten Raumrichtung eine größere Breite aufweist als in einer senkrecht zur ersten Raumrichtung verlaufenden zweiten Raumrichtung.

9. Trennsteg nach einem der vorangehenden Ansprüche, **dadurch gekennzeichnet, dass** die Zapfen (50) jeweils in einer zur Schmalseite (28) randoffenen Ausnehmung (54) verdrehbar aufgenommen sind.

10. Trennsteg nach Anspruch 9, **dadurch gekennzeichnet, dass** die Ausnehmungen (54) in Längsrichtung (44) im Abstand zu den Befestigungsmitteln (16) angeordnet sind.

11. Trennsteg nach Anspruch 9 oder 10, **dadurch gekennzeichnet, dass** die Ausnehmungen (54) jeweils eine zur Schmalseite (28) randoffene erste Partie (56) und eine gegenüber der ersten Partie (56) abgewinkelte zweite Partie (58) aufweisen, wobei die Zapfen (50) beim Verschwenken des Abdecckörpers (14) gegenüber dem Grundkörper (12) von der zugehörigen ersten Partie (56) in die zugehörige zweite Partie (58) beweglich sind.

12. Trennsteg nach Anspruch 11, **dadurch gekennzeichnet, dass** die Zapfen (50) gegen eine Rückhaltekraft aus der zugehörigen zweiten Partie (58) in die zugehörige erste Partie (56) beweglich sind.

13. Trennsteg nach einen der vorangehenden Ansprüche, **dadurch gekennzeichnet, dass** der Abdeckkörper (14) nahe seinen Enden (32) jeweils einen vom Grundkörper (12) weg vorstehenden Vorsprung (66) aufweist, der beim Verschwenken des Abdeckkörpers (14) gegenüber dem Grundkörper (12) durch Verdrehen des am betreffenden Ende (32) angeordneten Schwenkelements (38) eine Kante (68) am Grundkörper (12) in einer Endstellung rastend hintergreift.

14. Trennsteg für ein Kettenglied einer Energieführungskette, wobei das Kettenglied zwei im Abstand zueinander angeordnete, mittels eines oberen und eines unteren Rahmenstegs (18, 20) lösbar miteinander verbundene Seitenglieder aufweist und einen Abschnitt eines Führungskanals (62) zur Aufnahme von Versorgungsleitungen rings umschließt, mit einem Grundkörper (12), der Befestigungsmittel (16) zum lösbaren Befestigen am oberen Rahmensteg (18) und Befestigungsmittel (16) zum lösbaren Befestigen am unteren Rahmensteg (20) sowie mindestens eine zu einer sich zwischen den Befestigungsmitteln (16) erstreckenden Schmalseite (28) offene Einschuböffnung (24) für die Aufnahme eines Regalbodens (26) aufweist, und mit einem am Grundkörper (12) lösbar befestigten, die Schmalseite (28) des Grundkörpers (12) abdeckenden und die mindestens eine Einschuböffnung (24) an der Schmalseite (28) verschließenden Abdeckkörper (14), der an seinen Enden (32) jeweils einen Befestigungsbereich (34) aufweist, wobei die Befestigungsbereiche (34) jeweils ein Rastmittel (36) zum lösbaren Befestigen am Grundkörper (12) aufweisen, **dadurch gekennzeichnet, dass** die Befestigungsbereiche (34) jeweils ein verdrehbar im Grundkörper (12) aufgenommenes Schwenkelement (38) zum Verschwenken des Abdeckkörpers (14) bezüglich des Grundkörpers (12) aufweisen und dass der Abdeckkörper (14) nahe seinen Enden (32) jeweils einen vom Grundkörper (12) weg vorstehenden Vorsprung (66) aufweist, der beim Verschwenken des Abdeckkörpers (14) gegenüber dem Grundkörper (12) durch Verdrehen des am betreffenden Ende (32) angeordneten Schwenkelements (38) eine Kante (68) am Grundkörper (12) in einer Endstellung rastend hintergreift.

15. Kettenglied für eine Energieführungskette mit zwei im Abstand zueinander angeordneten Seitengliedern und mit einem oberen und einem unteren Rahmensteg (18, 20), die im Abstand zueinander angeordnet sind und die Seitenglieder lösbar miteinander verbinden, so dass die Seitenglieder und die Rahmenstege (18, 20) einen Abschnitt eines Führungskanals (62) zur Aufnahme von Versorgungsleitungen rings umschließen, **dadurch gekennzeichnet, dass** im Abschnitt des Führungskanals (62) zwei Trennstege (10) nach einem der vorangehenden Ansprüche aufgenommen und lösbar mit dem oberen und dem unteren Rahmensteg (18, 20) verbunden sind und dass mindestens ein Regalboden (26) in eine Einschuböffnung (24) jedes der beiden Trennstege (10) eingeschoben ist.

## Claims

1. Separating web for a chain link of an energy transmission chain, wherein the chain link has two spaced-apart side members detachably connected to one another by means of an upper and a lower frame web (18, 20), and the chain link surrounds a section of a guide channel (62) for receiving supply lines, comprising a main body (12), which has fastening means (16) for detachably securing to the upper frame web (18) and fastening means (16) for detachably securing to the lower frame web (20) and at least one insertion opening (24), open towards a narrow side (28) extending between the fastening means (16), which insertion opening (24) is for receiving a shelf (26), and comprising a cover body (14) detachably fastened on the base body (12), covering the narrow side (28) of the main body (12) and closing the at least one insertion opening (24) on the narrow side (28), which cover body (14) has a respective attachment region (34) at its ends (32), wherein the attachment regions (34) respectively have a latching means (36) for detachable attachment to the main body (12), **characterised in that** the attachment regions (34) respectively have a pivot element (38) incorporated rotatably in the main body (12) for pivoting the cover body (14) with respect to the main body (12) and **in that** the pivot elements (38) have two pins (50) respectively at each end (32) of the cover body (14), said pins (50) projecting in a second transverse direction (52) of sides spaced apart from one another, said transverse direction (52) extending transverse to the longitudinal direction (44) extending between the two ends (32).

2. Separating web according to claim 1, **characterised in that** the cover body (14) is mirror symmetrical with respect to a central plane (30) extending in the centre between its ends (32).

3. Separating web according to claim 2, **characterised in that** the main body (12) is mirror symmetrical with respect to the central plane (30).

4. Separating web according to any one of the preceding claims, **characterised in that** the latching means (36) have a latching tongue (40) at each end (32) of the cover body (14), which latching tongue (40) carries a latching hook (42) and is elastically deformable in a longitudinal direction (44) extending between the two ends (32), and this latching tongue (40) projects from the main body (12) in a first transverse direction (46).

5. Separating web according to claim 4, **characterised in that** the latching hook (42) projects at each end (32) in a direction away from the opposite end (32).

6. Separating web according to claim 4 or 5, **characterised in that** the first and the second transverse direction (46, 52) are substantially perpendicular to each other.

7. Separating web according to any one of the preceding claims, **characterised in that** the pins (50) are arranged on two opposite sides of a central part (48), which engages between two side members (60) of the main body (12).

8. Separating web according to any one of the preceding claims, **characterised in that** the pins (50) respectively have a cross section which has a greater width in a first spatial direction than in a second spatial direction perpendicular to the first spatial direction.

9. Separating web according to any one of the preceding claims, **characterised in that** the pins (50) are rotatably received respectively in a recess (54) open at the edges towards the narrow side (28).

10. Separating web according to claim 9, **characterised in that** the recesses (54) are arranged at a distance from the fastening means (16) in the longitudinal direction (44).

11. Separating web according to claim 9 or 10, **characterised in that** the recesses (54) respectively have a first part (56) open at the edges towards the narrow side (28) and a second part (58) angled with respect to the first part (56), wherein the pins (50) are movable when pivoting the cover body (14) relative to the main body (12) from the associated first part (56) into the associated second part (58).

12. Separating web according to claim 11, **characterised in that** the pins (50) are movable against a retaining force from the associated second part (58) into the associated first part (56).

13. Separating web according to any one of the preceding claims, **characterised in that** the cover body (14) respectively has a projection (66) near its ends (32) projecting away from the main body (12), which engages in a latching manner in an end position behind an edge (68) on the main body (12) upon pivoting of the cover body (14) relative to the main body (12) by rotation of the pivot element (38) arranged on the respective end (32).

14. Separating web for a chain link of an energy transmission chain, wherein the chain link has two spaced-apart side members detachably connected to one another by means of an upper and a lower frame web (18, 20), and the chain link surrounds a section of a guide channel (62) for receiving supply lines, comprising a main body (12), which has fastening means (16) for detachably securing to the upper frame web (18) and fastening means (16) for detachably securing to the lower frame web (20) and at least one insertion opening (24), open towards a narrow side (28) extending between the fastening means (16), which insertion opening (24) is for receiving a shelf (26), and comprising a cover body (14) detachably fastened on the base body (12), covering the narrow side (28) of the main body (12) and closing the at least one insertion opening (24) on the narrow side (28), which cover body (14) has a respective attachment region (34) at its ends (32), wherein the attachment regions (34) respectively have a latching means (36) for detachable attachment to the main body (12), **characterised in that** the attachment regions (34) respectively have a pivot element (38) incorporated rotatably in the main body (12) for pivoting the cover body (14) with respect to the main body (12) and **in that** the cover body (14) respectively has a projection (66) near its ends (32) projecting away from the main body (12), which engages in a latching manner in an end position behind an edge (68) on the main body (12) upon pivoting of the cover body (14) relative to the main body (12) by rotation of the pivot element (38) arranged on the respective end (32).

15. Chain link for an energy transmission chain having two spaced-apart side members and having an upper and a lower frame web (18, 20), which are arranged at a distance from each other and detachably connect the side members to one another, so that the side members and the frame webs (18, 20) surround a section of a guide channel (62) for receiving supply lines, **characterised in that** two separating webs (10) according to any one of the preceding claims are incorporated in the section of the guide channel (62) and detachably connected to the upper and the lower frame web (18, 20) and **in that** at least one shelf (26) is inserted into an insertion opening (24) of each of the two separating webs (10).

## Revendications

1. Entretoise de séparation pour un maillon de chaîne d'une chaîne de guidage d'énergie, sachant que le maillon de chaîne présente deux éléments latéraux disposés à distance entre eux, reliés entre eux de manière amovible au moyen d'une entretoise de cadre supérieure (18) et d'une entretoise de cadre inférieure (20), et entoure annulairement une partie d'un canal de guidage (62) destiné à recevoir des lignes d'alimentation, avec un corps de base (12), qui présente des moyens de fixation (16) pour la fixation amovible sur l'entretoise de cadre supérieure (18) et des moyens de fixation (16) pour la fixation amovible sur l'entretoise de cadre inférieure (20) ainsi qu'au moins une ouverture d'insertion (24), ouverte vers un côté étroit (28) s'étendant entre les moyens de fixation (16) et destinée à recevoir une tablette (26), et avec un corps de recouvrement (14) fixé de manière amovible sur le corps de base (12), recouvrant le côté étroit (28) du corps de base (12) et fermant l'ouverture d'insertion au moins unique (24) sur le côté étroit (28), corps qui présente une région de fixation (34) à chacune de ses extrémités (32), sachant que les régions de fixation (34) présentent chacune un moyen d'enclenchement (36) pour la fixation amovible sur le corps de base (12), **caractérisée en ce que** les régions de fixation (34) présentent chacune un élément pivotant (38), reçu à rotation dans le corps de base (12) et destiné au pivotement du corps de recouvrement (14) par rapport au corps de base (12) et **en ce que** les éléments pivotants (38), à chaque extrémité (32) du corps de recouvrement (14), présentent chacun deux tenons (50) faisant saillie vers des côtés mutuellement opposés dans une deuxième direction transversale (52) s'étendant transversalement à la direction longitudinale (44) s'étendant entre les deux extrémités (32).

2. Entretoise de séparation selon la revendication 1, **caractérisée en ce que** le corps de recouvrement (14) est symétrique par rapport à un plan médian (30) s'étendant au milieu entre ses extrémités (32).

3. Entretoise de séparation selon la revendication 2, **caractérisée en ce que** le corps de base (12) est symétrique par rapport au plan médian (30).

4. Entretoise de séparation selon l'une des revendications précédentes, **caractérisée en ce que** les moyens d'enclenchement (36), à chaque extrémité (32) du corps de recouvrement (14), présentent une languette d'enclenchement (40) élastiquement déformable dans une direction longitudinale (44) s'étendant entre les deux extrémités (32) et portant un crochet d'enclenchement (42), languette qui dépasse hors du corps de base (12) dans une première direction transversale (46).

5. Entretoise de séparation selon la revendication 4, **caractérisée en ce que** le crochet d'enclenchement (42), à chaque extrémité (32), fait saillie en éloignement de l'extrémité opposée (32).

6. Entretoise de séparation selon la revendication 4 ou 5, **caractérisée en ce que** la première direction transversale (46) et la deuxième direction transversale (52) s'étendent sensiblement perpendiculairement entre elles.

7. Entretoise de séparation selon l'une des revendications précédentes, **caractérisée en ce que** les tenons (50) sont disposés sur deux côtés mutuellement opposés d'une partie centrale (48) qui s'engage entre deux joues (60) du corps de base (12).

8. Entretoise de séparation selon l'une des revendications précédentes, **caractérisée en ce que** les tenons (50) présentent chacun une section transversale qui présente une plus grande largeur dans une première direction spatiale que dans une deuxième direction spatiale s'étendant perpendiculairement à la première direction spatiale.

9. Entretoise de séparation selon l'une des revendications précédentes, **caractérisée en ce que** les tenons (50) sont chacun reçus à rotation dans un évidement (54) à bord ouvert en direction du côté étroit (28).

10. Entretoise de séparation selon la revendication 9, **caractérisée en ce que** les évidements (54) sont disposés à distance des moyens de fixation (16) en direction longitudinale (44).

11. Entretoise de séparation selon la revendication 9 ou 10, **caractérisée en ce que** les évidements (54) présentent chacun une première partie (56) à bord ouvert en direction du côté étroit (28) et une deuxième partie (58) coudée par rapport à la première partie (56), sachant que les tenons (50), lors du pivotement du corps de recouvrement (14) par rapport au corps de base (12), peuvent être déplacés de la première partie respective (56) dans la deuxième partie respective (58).

12. Entretoise de séparation selon la revendication 11, **caractérisée en ce que** les tenons (50) peuvent être déplacés de la deuxième partie respective (58) dans la première partie respective (56) à l'encontre d'une force de retenue.

13. Entretoise de séparation selon l'une des revendications précédentes, **caractérisée en ce que** le corps de recouvrement (14) présente, à proximité de chacune de ses extrémités (32), une saillie (66) dépassant en éloignement du corps de base (12), saillie qui, lors du pivotement du corps de recouvrement (14) par rapport au corps de base (12), par la rotation de l'élément pivotant (38) disposé à l'extrémité correspondante (32), s'engage derrière une arête (68) sur le corps de base (12) en enclenchement dans une position finale.

14. Entretoise de séparation pour un maillon de chaîne d'une chaîne de guidage d'énergie, sachant que le maillon de chaîne présente deux éléments latéraux disposés à distance entre eux, reliés entre eux de manière amovible au moyen d'une entretoise de cadre supérieure (18) et d'une entretoise de cadre inférieure (20), et entoure annulairement une partie d'un canal de guidage (62) destiné à recevoir des lignes d'alimentation, avec un corps de base (12), qui présente des moyens de fixation (16) pour la fixation amovible sur l'entretoise de cadre supérieure (18) et des moyens de fixation (16) pour la fixation amovible sur l'entretoise de cadre inférieure (20) ainsi qu'au moins une ouverture d'insertion (24), ouverte vers un côté étroit (28) s'étendant entre les moyens de fixation (16) et destinée à recevoir une tablette (26), et avec un corps de recouvrement (14) fixé de manière amovible sur le corps de base (12), recouvrant le côté étroit (28) du corps de base (12) et fermant l'ouverture d'insertion au moins unique (24) sur le côté étroit (28), corps qui présente une région de fixation (34) à chacune de ses extrémités (32), sachant que les régions de fixation (34) présentent chacune un moyen d'enclenchement (36) pour la fixation amovible sur le corps de base (12), **caractérisée en ce que** les régions de fixation (34) présentent chacune un élément pivotant (38), reçu à rotation dans le corps de base (12) et destiné au pivotement du corps de recouvrement (14) par rapport au corps de base (12) et **en ce que** le corps de recouvrement (14) présente, à proximité de chacune de ses extrémités (32), une saillie (66) dépassant en éloignement du corps de base (12), saillie qui, lors du pivotement du corps de recouvrement (14) par rapport au corps de base (12), par la rotation de l'élément pivotant (38) disposé à l'extrémité correspondante (32), s'engage derrière une arête (68) sur le corps de base (12) en enclenchement dans une position finale.

15. Maillon de chaîne pour une chaîne de guidage d'énergie, avec deux éléments latéraux disposés à distance entre eux et avec une entretoise de cadre supérieure (18) et une entretoise de cadre inférieure (20), qui sont disposées à distance entre elles et qui relient les éléments latéraux entre eux de manière amovible, de sorte que les éléments latéraux et les entretoises de cadre (18, 20) entourent annulairement une partie d'un canal de guidage (62) destiné à recevoir des lignes d'alimentation, **caractérisé en ce que** deux entretoises de séparation (10) selon l'une des revendications précédentes sont reçues dans la partie du canal de guidage (62) et sont reliées de manière amovible à l'entretoise de cadre supérieure (18) et à l'entretoise de cadre inférieure (20), et **en ce qu'**au moins une tablette (26) est insérée dans une ouverture d'insertion (24) de chacune des deux entretoises de séparation (10).
